(19) Europäisches Patentamt
European Patent Office
Office européen des brevets

(11) **EP 3 710 849 B1**

(12) **FASCICULE DE BREVET EUROPEEN**

(45) Date de publication et mention de la délivrance du brevet:
**17.06.2026   Bulletin 2026/25**

(21) Numéro de dépôt: **18800211.7**

(22) Date de dépôt: **16.11.2018**

(51) Classification Internationale des Brevets (IPC):
**G01S 3/46** *(2006.01)*   **G01S 3/18** *(2006.01)*
**G01S 3/04** *(2006.01)*   **G01S 7/02** *(2006.01)*

(52) Classification Coopérative des Brevets (CPC):
**G01S 3/46; G01S 3/043; G01S 3/18; G01S 7/021**

(86) Numéro de dépôt international:
**PCT/EP2018/081501**

(87) Numéro de publication internationale:
**WO 2019/096966 (23.05.2019 Gazette 2019/21)**

(54) **GONIOMÈTRE D'AMPLITUDE ET PLATE-FORME ASSOCIÉE**

AMPLITUDENGONIOMETER UND ZUGEHÖRIGE PLATTFORM

AMPLITUDE GONIOMETER AND ASSOCIATED PLATFORM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:   **16.11.2017   FR 1701184**

(43) Date de publication de la demande:
**23.09.2020   Bulletin 2020/39**

(73) Titulaire: **Thales**
**92400 Courbevoie (FR)**

(72) Inventeurs:
• **BAUCHE-COSTES, Clémentine**
**29238 Brest Cedex 3 (FR)**
• **JAHAN, Daniel**
**29238 Brest Cedex 3 (FR)**
• **BREUIL, Nicolas**
**78851 Elancourt (FR)**
• **GUARDIA, Vincent**
**29238 Brest Cedex 3 (FR)**

(74) Mandataire: **Lavoix**
**2, place d'Estienne d'Orves**
**75441 Paris Cedex 09 (FR)**

(56) Documents cités:
WO-A1-2016/186998       WO-A1-2017/109219
FR-A1- 3 028 320        US-A1- 2005 035 894

**Description**

DOMAINE TECHNIQUE DE L'INVENTION

La présente invention concerne un goniomètre d'amplitude et une plate-forme comportant un tel goniomètre d'amplitude.

ARRIÈRE-PLAN TECHNOLOGIQUE

Dans le domaine des détecteurs de radars, les récepteurs à large bande instantanée sont couramment utilisés en raison d'une gamme de fréquence à surveiller très élevée et de l'incertitude sur la fréquence du signal incident à un instant donné. Ces détecteurs de radars sont aussi couramment des goniomètres instantanés capables de délivrer la direction d'arrivée d'un signal radar incident même limité à une seule impulsion très brève.

Les principes de goniométrie instantanée reposent toujours sur l'emploi d'un ensemble de $P$ antennes, a priori identiques, $P$ étant au moins égal à 2, apte à délivrer simultanément un ensemble de signaux électriques, porteur globalement de la direction d'arrivée du signal radioélectrique incident.

D'une façon générale, chaque antenne est suivie d'une chaîne de réception apte à amplifier et filtrer le signal qu'elle lui fournit, les $P$ signaux délivrés par les $P$ chaînes de réception permettant l'estimation de la direction d'arrivée.

Il convient de distinguer les deux cas de goniomètre classiquement employés : les goniomètres d'amplitude et les interféromètres. Tous ces goniomètres utilisent généralement des antennes identiques de directivité appropriée.

Les antennes d'un goniomètre d'amplitude sont angulairement pointées de façon décalée les unes par rapport aux autres dans le plan de mesure de l'angle d'arrivée d'un signal incident, de façon que leur directivité leur fasse délivrer un ensemble de signaux dont les puissances sont représentatives de cet angle d'arrivée.

Les antennes d'un interféromètre sont angulairement pointées dans la même direction en étant spatialement décalées les unes par rapport aux autres dans le plan de mesure de l'angle d'arrivée d'un signal incident, de façon qu'elles délivrent un ensemble de signaux dont les phases relatives sont représentatives de cet angle d'arrivée.

L'encombrement spectral des bandes de fréquence d'intérêt impose d'avoir un pouvoir séparateur en fréquence, qui est très généralement fait par analyse spectrale, et compte tenu des composants disponibles, fait plus particulièrement par analyse spectrale numérique basée sur l'emploi de transformées de Fourier discrètes (TFD) réalisées par transformées de Fourier rapides (FFT, *Fast Fourier Transform*). Ainsi une chaîne de réception, qui est la partie analogique, est généralement suivie d'un module de réception numérique comprenant un module de conversion analogique-numérique, utilisant un échantillonneur-bloqueur et un convertisseur analogique-numérique travaillant avec une fréquence d'échantillonnage $f_e$, lui-même suivi d'un module de traitement numérique du signal réalisant la TFD souhaitée.

Compte tenu de la bande instantanée très élevée, typiquement de l'ordre d'au moins 16$GHz$, il n'existe pas de composants de conversion analogique-numérique raisonnablement utilisables aujourd'hui capables de respecter le théorème de Shannon. De plus, son respect aboutirait à des flux de données numériques, typiquement de l'ordre de 40$Gbit/s$, dont l'acheminement par bus pose de sérieux problèmes de faisabilité et n'est pas absolument compatible avec les capacités de traitement des FPGA (*Field Gate Programmable Array*) actuels utilisés pour réaliser les modules de traitement numérique du signal.

Une solution connue est de numériser le signal avec une fréquence d'échantillonnage ne respectant pas le théorème de Shannon, ainsi la demi-fréquence d'échantillonnage $\frac{f_e}{2}$ est inférieure à la bande de fréquence d'intérêt, on parle alors de sous-échantillonnage. La conséquence est le non-respect de l'intégrité spectrale et que la fréquence mesurée, comprise entre 0 et la demi-fréquence d'échantillonnage $\frac{f_e}{2}$, est ambiguë ce qui impose l'utilisation de plusieurs fréquences d'échantillonnage $f_{e,n}$ différentes et non-multiples entre elles. On notera en toute rigueur que, pour respecter l'intégrité spectrale, le théorème de Shannon est une condition nécessaire mais pas suffisante. En effet, le respect de l'intégrité spectrale tient au placement de la bande de fréquence d'intérêt dans une seule zone de Nyquist ; on rappelle qu'une fréquence d'échantillonnage $f_e$ définit les zones de Nyquist comme les bandes de fréquence $\left[l\frac{f_e}{2}, (l+1)\frac{f_e}{2}\right[$.

Le document WO 2010/069683 A1 divulgue un échantillonnage du signal avec $N$ fréquences légèrement différentes et non-multiples entre elles, une mesure d'une fréquence ambiguë pour chaque fréquence d'échantillonnage, et l'extraction d'une fréquence non ambiguë à partir de ces $N$ fréquences ambiguës.

L'application directe à un goniomètre à $P$ antennes conduit donc à disposer en sortie de chacune des $P$ chaînes de réception suivant chacune des $P$ antennes, de $N$ modules de réception numérique en parallèle, chaque module de réception numérique étant composée d'un module de conversion analogique-numérique, travaillant avec l'une des $N$ fréquences d'échantillonnage différentes qui lui est dédiée, et d'un module de traitement numérique du signal. Finalement ledit goniomètre à $P$ antennes possède $P \cdot N$ modules de réception numérique.

Ce nombre $P \cdot N$ de modules de réception numérique peut rapidement devenir prohibitif pour des applications pour des raisons de coût, mais aussi de volume, de masse, de consommation, de dissipation thermique et de fiabilité. Il est donc souhaitable de minimiser ce nombre de modules de réception numérique.

Le document WO 2004/097450 résout ce problème en utilisant un seul module de réception numérique en sortie de chaîne de réception, chaque module de réception numérique ayant une fréquence d'échantillonnage différente, et en n'utilisant pas le signal de la voie pour laquelle la fréquence du signal est égale ou très proche de la demi-fréquence d'échantillonnage ou de l'un de ses multiples. Dans ce cas, le goniomètre qui possède $P$ antennes n'en n'utilise que $P$ - 1, ce qui dégrade les performances.

RÉSUMÉ DE L'INVENTION

Il existe donc un besoin pour un goniomètre permettant de minimiser la quantité de matériel à précision et robustesse de mesure données, la quantité de matériel jouant directement sur les aspects coût, volume, masse, consommation, dissipation thermique et fiabilité.

Partant de ce besoin, le demandeur s'est proposé de trouver une solution pour diminuer substantiellement le nombre des modules de réception numérique.

L'invention propose donc un goniomètre d'amplitude selon la revendication indépendante 1. Des modes de réalisation plus précis sont définis par les revendications dépendantes.

Dans le cas d'un interféromètre, qui ne fait pas partie de la présente invention, le problème technique devient celui d'une répartition des $N$ fréquences d'échantillonnage sur les $P$ chaînes de réception en tenant compte des premier et deuxième éléments qui vont suivre.

Dans le cas d'un goniomètre d'amplitude, le problème technique devient celui d'une répartition des $N$ fréquences d'échantillonnage sur les $Q$ chaînes de réception adjacente, $Q$ étant au plus égal à $P$, en tenant compte des premier, deuxième, troisième et quatrième éléments qui vont suivre.

Le premier élément à prendre en compte est qu'un signal de fréquence $f$ multiple de la demi-fréquence d'échantillonnage, $f = k \frac{f_e}{2}$ avec $k$ entier naturel non nul, ne peut être caractérisé ni en amplitude, ni en phase.

En effet, un signal sinusoïdal de fréquence $f$, échantillonné à la fréquence $f_e$ a pour expression $s(n) = \mathrm{A} \cos\left(2\pi f \frac{n}{f_e} + \varphi\right)$. Si $f = k \frac{f_e}{2}$, alors :

$$s(n) = A \cos(\pi k n + \varphi) = \mathrm{A}[\cos(\pi k n)\cos(\varphi) - \sin(\pi k n)\sin(\varphi)] = A \cos(\pi k n)\cos(\varphi)$$

L'analyse spectrale par TFD permet, dans le cas général, de calculer l'amplitude et la phase du signal. Dans le cas où $f = k \frac{f_e}{2}$, le signal se replie, soit en $f = 0$ si $k$ est pair, soit en $f = \frac{f_e}{2}$ si $k$ est impair. Le résultat est donc, pour $k$ pair :

$$TFD\{s\}(f = 0) = A \sum_{n=0}^{N-1} \cos(\pi k n) \cos(\varphi) \, e^0 = A \sum_{n=0}^{N-1} \cos(\varphi) = NA \cos(\varphi)$$

et pour $k$ impair :

$$TFD\{s\}\left(f = \frac{f_e}{2}\right) = A \sum_{n=0}^{N-1} \cos(\pi k n) \cos(\varphi) \, e^{-i\pi n} = A \sum_{n=0}^{N-1} \cos(\pi k n) \cos(\varphi) \cos(\pi n)$$

$$= A \sum_{n=0}^{N-1} \cos(\varphi) = NA \cos(\varphi)$$

Le résultat aux fréquences de signal multiples de la demi-fréquence d'échantillonnage est un nombre réel proportionnel à $\cos(\varphi)$. Réel, il ne peut porter une phase quelconque. Sa proportionnalité à $\cos(\varphi)$, alors que $\varphi$ est une phase à l'origine qui n'est pas maîtrisée, ne permet pas d'en déduire l'amplitude. Il ne permet donc plus d'estimer la direction d'arrivée du signal, ni par interférométrie, ni par goniométrie d'amplitude. D'une façon générale, la prise en compte de cet élément conduit à avoir au moins 2 fréquences d'échantillonnage différentes par voies de réception pour assurer au moins une mesure de phase ou une mesure d'amplitude.

Le deuxième élément à prendre en compte dans le cas d'un interféromètre et que l'estimation de direction d'arrivée est basée sur un calcul des déphasages entre antennes. La phase mesurée classiquement après TFD est la somme :

- de la phase du signal délivré par l'antenne considérée ;
- d'un terme dépendant de l'écart entre la fréquence du signal mesurée dans la zone de Nyquist utilisée et la fréquence centrale du filtre de la TFD ;
- d'un terme dû au bruit thermique de la chaîne de réception.

Soit finalement :

$$\varphi_{mes} = \varphi_{signal} + \varphi_{TFD} + \varphi_{Bth}$$

La grandeur d'intérêt n'est pas directement la phase du signal issu d'une antenne, mais le déphasage entre les signaux issus de deux antennes percevant un même signal incident. Ainsi, le terme $\varphi_{TFD}$ peut s'annuler naturellement par soustraction à condition que les durées d'analyse des TFD soient identiques pour assurer des fréquences centrales des filtres de TFD identiques. C'est de fait toujours ainsi pour les interféromètres travaillant avec une seule fréquence d'échantillonnage.

Pour une fréquence d'échantillonnage $f_{e,n}$, le nombre d'échantillons de signal $M_n$ correspondant à une durée $\Delta T_n$ vaut $M_n = \Delta T_n \cdot f_{e,n}$.

Si l'on souhaite calculer des différences de phase entre deux signaux échantillonnés à des fréquences différentes $f_{e,n}$, on peut donc calculer les TFD :

- soit sur une durée d'analyse identique $\Delta T_n = \Delta T$, leur nombre de points $M_n$ n'est alors pas identique car $\frac{f_{e,n}}{M_n} = \Delta T$, et une seule valeur de $M_n$ peut être une puissance de 2 et une seule TFD pourra être réalisée par une FFT, avec pour conséquence finale un coût en ressource de calcul ;
- soit sur un nombre unique de points $M$, majorant des nombres $M_n$, par exemple $\max_{n \in [1,N]}(M_n)$, et pris égal à une puissance de 2, de façon à profiter d'une réalisation par FFT. Mais dans ce cas, les durées d'analyse des TFD ne sont pas identiques, les fréquences centrales des filtres de TFD de chaque TFD ne sont pas identiques et donc l'écart entre la fréquence mesurée et le centre du filtre de TFD correspondant n'est pas identique d'une TFD à l'autre. Il faut alors compenser le terme $\varphi_{TFD}$ par le calcul, ce qui nécessite d'estimer précisément la fréquence du signal.

Notons que le problème se pose également pour un goniomètre d'amplitude, car la mesure d'amplitude dépend également du placement de la fréquence du signal dans le filtre de TFD. Cependant l'erreur induite sur la mesure de l'amplitude est relativement faible et sa correction ne nécessite pas une grande précision de l'estimation de la fréquence du signal, d'autant plus que cette erreur est minimisée par la pondération du signal généralement utilisée qui élargit la bande passante du filtre de TFD.

Le troisième élément à prendre en compte est la couverture angulaire instantanée d'un goniomètre d'amplitude. En effet, celle-ci est généralement de 360° parce qu'on ne sait pas d'où peuvent venir les signaux incidents dans le plan horizontal et qu'il faut une grande réactivité. Une couverture angulaire instantanée inférieure à 360° est toutefois envisageable dans les cas d'application moins exigeants, pouvant se satisfaire d'une telle couverture instantanée réduite soit fixe, soit orientable de façon à pouvoir balayer un domaine angulaire plus grand, pouvant atteindre 360° au besoin, mais pas de façon instantanée. En goniométrie d'amplitude, on convient de référencer les antennes par l'indice $p$ allant de 0 à $P$ - 1, la valeur de $p$ correspondant à un ordre angulaire donné (valeurs croissant dans le sens trigonométrique ou dans le sens inverse, dans le plan de mesure de la direction d'arrivée, la référence $p$ = 0 pouvant être quelconque). Tous les constituants liés à une antenne (voie de réception, chaîne de réception, module de réception numérique) possèdent son indice. Dans la suite, par voie de réception, on entend l'ensemble matériel qui permet d'acquérir la grandeur physique d'intérêt pour l'estimation de la direction d'arrivée. Le troisième élément à prendre en compte est de savoir si la couverture angulaire instantanée est égale ou inférieure à 360°, car le cas de l'égalité à 360° pose un problème de répartition des fréquences d'échantillonnage à la transition entre la dernière voie de réception d'indice $P$ - 1 et la première voie d'indice 0.

Le quatrième élément à prendre en compte est que l'estimation de la direction d'arrivée en goniométrie d'amplitude se fait avec un nombre minimal de voies de réception adjacentes $Q$, détectant le signal et délivrant une amplitude, parmi les $P$ au total. Par $Q$ voies de réception adjacentes, il faut comprendre un ensemble de $Q$ voies de réception dont les indices sont successifs. La distinction sur la couverture angulaire, précédemment faite, a une incidence sur la signification du terme *indices successifs*. Si la couverture angulaire est inférieure à 360°, la succession est bornée par les indices extrêmes 0 et $P$ - 1. En revanche, si la couverture angulaire vaut 360°, la succession n'est plus bornée par les indices extrêmes, mais elle est basée sur la continuité circulaire, 0 succédant à $P$ - 1.

D'un point de vue théorique, $Q$ peut être compris entre 1 et $P$, et $Q$ est d'autant plus grand qu'on cherche de la précision angulaire. En pratique, on admettra généralement que $Q$ vaut au moins 2, de façon à pouvoir faire une estimation basée d'une manière ou d'une autre, sur la pondération des directions de pointages des antennes liées aux voies de réception détectant le signal par les amplitudes correspondantes. La valeur $Q = 1$ est mentionnée car elle est possible en toute rigueur. Elle aboutit toutefois à une estimation de la direction d'arrivée rudimentaire sans calcul car ne pouvant correspondre qu'à la direction de pointage de l'antenne concernée. De plus, la contrainte de lever les ambiguïtés en fréquence impose dans ce cas de disposer des $N$ fréquences d'échantillonnage pour chacune des $P$ voies de réception, ce qui va à l'encontre de la réduction souhaitée du nombre total de modules de réception numérique.

Du fait des éléments à prendre en compte pour obtenir un interféromètre optimisant la quantité de module de réception numérique à performances données, la présente description porte sur un Interféromètre comprenant un réseau interférométrique à $P$ voies de réception, $P$ étant un nombre entier supérieur ou égal à 2, chaque voie de réception étant repérée par un indice p, l'indice p étant un entier compris entre 0 et $P$ - 1, chaque voie de réception comportant une antenne couplée à une chaîne de réception, chaque chaîne de réception étant suivie d'au moins deux modules de réception numérique comprenant chacun un module de conversion analogique-numérique, chaque module de conversion analogique-numérique étant associé à une fréquence d'échantillonnage respective, chaque fréquence d'échantillonnage ne respectant pas le critère de Shannon et n'étant pas multiple de l'une des autres fréquences d'échantillonnage, $N$ étant le nombre de fréquences d'échantillonnage associées aux modules de conversion analogique-numérique appartenant au $P$ voies de réception, $N$ étant supérieur ou égal à 2, chaque fréquence d'échantillonnage étant référencée par un indice $n$, l'indice $n$ étant compris entre 0 et $N$ - 1, une paire de fréquences d'échantillonnage d'indices $n$ et $n + 1$ pouvant être associée à une paire de modules de conversion analogique-numérique d'une même voie de réception.

Selon des modes de réalisation particuliers, l'interféromètre présente une ou plusieurs des caractéristiques suivantes, prise(s) isolément ou selon toutes les combinaisons techniquement possibles :

- chaque voie de réception d'indice $p$, allant de 0 à $P$ - 1, ne possède qu'une paire de modules de conversion analogique-numérique.
- le nombre de fréquences d'échantillonnage $N$ est égal au nombre de voies de réception $P$, et la paire de modules de conversion analogique-numérique de la voie de réception d'indice $p$ est associée à la paire de fréquences d'échantillonnage d'indices $p$ et $p + 1$.
- le nombre de fréquences d'échantillonnage $N$ est inférieur au nombre de voies de réception $P$, et la paire de fréquences d'échantillonnage d'indices $n$ et $n + 1$ est associée à la paire de modules de conversion analogique-numérique de la voie de réception d'indice $n$, les modules de conversion analogique-numérique des $P$ - $N$ autres voies de réception étant associés à une quelconque paire de fréquence d'échantillonnage d'indices $n$ et $n + 1$.
- le nombre de fréquences d'échantillonnage $N$ est supérieur au nombre de voies de réception $P$, et chaque voie de réception d'indice $p$ allant de 0 à $P$ - 1, possède une paire de modules de conversion analogique-numérique associée à une paire de fréquences d'échantillonnage d'indices $p$ et $p + 1$
- les $N$ - $P$ fréquences d'échantillonnage n'appartenant pas aux paires d'indices $p$ et $p + 1$ sont associées respectivement à des modules de conversion analogique-numérique des $N$ - $P$ modules de réception numérique supplémentaires, ces modules de réception numérique supplémentaires étant affectés de façon quelconque à l'ensemble des $P$ voies de réception.
- l'interféromètre comporte un calculateur propre à traiter les signaux provenant des modules de réception numérique.
- chaque module de conversion analogique-numérique est relié à un module de traitement numérique du signal propre à effectuer une analyse spectrale des signaux échantillonnés.
- l'analyse spectrale est réalisée par transformée de Fourier discrète associée à une pondération des signaux échantillonnés en amont.

Similairement, pour obtenir un goniomètre d'amplitude, la présente invention porte sur un goniomètre d'amplitude comprenant $P$ voies de réception, $P$ étant un nombre entier supérieur ou égal à 2, chaque voie de réception étant repérée par un indice $p$ correspondant à un ordre angulaire donné, l'indice $p$ étant un entier compris entre 0 et $P$ - 1, chaque voie de réception comportant une antenne couplée à une chaîne de réception, chaque chaîne de réception étant suivie d'au moins deux modules de réception numérique comprenant chacun un module de conversion analogique-numérique, chaque module de conversion analogique-numérique étant associé à une fréquence d'échantillonnage respective, chaque fréquence d'échantillonnage ne respectant pas le critère de Shannon et n'étant pas multiple de l'une des autres fréquences d'échantillonnage, $N$ étant le nombre de fréquences d'échantillonnage associées aux modules de conversion analogique-numérique appartenant au $P$ voies de réception, $N$ étant supérieur ou égal à 2, chaque fréquence d'échantillonnage étant référencée par un indice $n$, l'indice $n$ étant compris entre 0 et $N$ - 1, l'estimateur de goniométrie d'amplitude travaillant à partir des amplitudes des signaux issus d'au moins $Q$ voies de réception adjacentes parmi les $P$ voies de réception, $Q$ étant au plus égal à $P$, les fréquences d'échantillonnage étant associées aux modules de conversion analogique-numérique de ces Q voies de réception adjacentes.

Selon l'invention, le goniomètre d'amplitude présente les caractéristiques suivantes :

- les $N$ fréquences d'échantillonnage sont réparties en $J$ groupes de fréquences d'échantillonnage, chaque groupe comprenant au moins 2 fréquences d'échantillonnage différentes, avec $J$ étant minimal et au plus égal à $Q$.

- les modules de conversion analogique-numérique d'une voie de réception d'indice $p$ sont associés au groupe de fréquences d'échantillonnage $G_{p \cdot \mathrm{mod}(J)}$, pour $p$ allant de 0 à $P$ - 1.

- la couverture angulaire est égale à 360° et $P$ est supérieur ou égal à 3.

- $P$ n'est ni un multiple de $J$, ni égal à $Q$, et dans lequel les fréquences d'échantillonnage des groupes $G_R$ à $G_{J-1}$ sont associées respectivement à des modules de conversion analogique-numérique de modules de réception numérique complémentaires, ces modules de réception numérique complémentaires étant affectés de façon quelconque à l'ensemble des deux voies de réception $V_0$ et $V_{P-1}$, et $R$ étant le reste de la division euclidienne de $P$ par $J$.

Selon des modes de réalisation particuliers, le goniomètre présente également une ou plusieurs des caractéristiques suivantes :

- le nombre de voies de réception adjacentes minimal requis par l'estimation de la direction d'arrivée est égal à 2.
- le goniomètre comporte un calculateur propre à traiter les signaux provenant de module de réception numérique.
- chaque système de conversion analogique-numérique est relié à un module de traitement numérique du signal propre à effectuer une analyse spectrale des signaux échantillonnés.
- l'analyse spectrale est réalisée par transformée de Fourier discrète associée à une pondération des signaux échantillonnés en amont.

La présente description propose aussi une plate-forme comportant un interféromètre ou un goniométrie d'amplitude prenant en compte les éléments de contrainte précédemment exposés et conduisant aux modes de réalisation qui suivent.

BRÈVE DESCRIPTION DES DESSINS

Des caractéristiques et avantages de l'invention apparaîtront à la lecture de la description qui va suivre, donnée uniquement à titre d'exemple non limitatif, et faite en référence aux dessins annexés, sur lesquels :

- la figure 1 est une vue schématique d'un interféromètre comportant un calculateur,
- la figure 2 est une représentation schématique d'un exemple d'interféromètre,
- la figure 3 est une représentation schématique d'un autre exemple d'interféromètre,
- la figure 4 est une représentation schématique d'encore un autre exemple d'interféromètre,
- la figure 5 est une représentation schématique d'un autre exemple d'interféromètre,
- la figure 6 est une représentation schématique d'un exemple de goniomètre d'amplitude,
- la figure 7 est une représentation schématique d'un autre exemple de goniomètre d'amplitude, et
- la figure 8 est une représentation schématique d'un autre exemple de goniomètre d'amplitude.

DESCRIPTION DE MODES DE RÉALISATION DE L'INVENTION

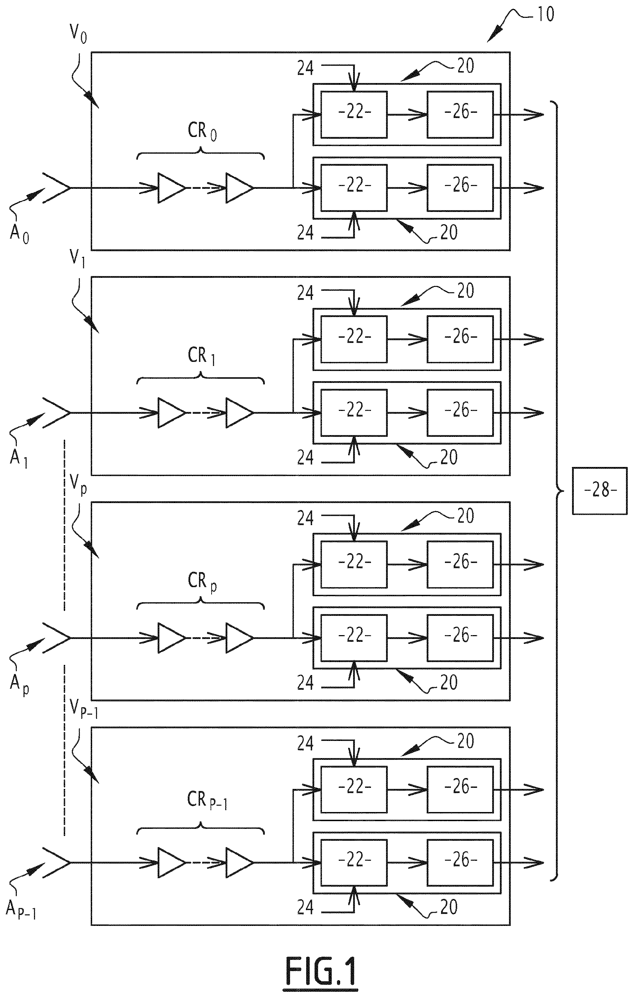

La figure 1 illustre un interféromètre 10 utilisant $P$ antennes, $P$ étant un nombre entier supérieur ou égal à 2.
L'interféromètre 10 fait partie d'une plate-forme, la plate-forme étant à titre d'exemple un aéronef.
Chaque antenne est repérée par un indice $p$, correspondant à un nombre entier compris entre 0 et $P$ - 1.
Chaque antenne $A_0$, ..., $A_{P-1}$ délivre son signal de sortie à l'entrée d'une chaîne de réception $CR_0$, ..., $CR_{P-1}$, représentant la partie purement analogique.
Chaque chaîne de réception $CR_0$, ..., $CR_{P-1}$ délivre son signal de sortie, filtré et porté à une puissance exploitable, à au moins deux modules de réception numérique 20 comportant chacun un module de conversion analogique-numérique 22 suivis d'un module de traitement numérique du signal 26.
Chaque module de conversion analogique-numérique 22 est propre à effectuer un échantillonnage à une fréquence d'échantillonnage 24.
Pour la suite, un module de conversion analogique-numérique 22 est associé à une fréquence d'échantillonnage 24 lorsque le module de conversion analogique-numérique 22 est propre à effectuer un échantillonnage à la fréquence d'échantillonnage 24.

La bande de fréquence à l'entrée du module de conversion analogique-numérique 22 n'est pas contenue dans une seule zone de Nyquist définie par la fréquence d'échantillonnage 24.

Le module de traitement numérique du signal 26 réalise une TFD du signal numérique fourni par module de conversion analogique-numérique 22, très généralement après avoir effectué une pondération de ce signal sur la durée d'analyse désirée, cette pondération visant essentiellement à minimiser les lobes secondaires spectraux pour la dynamique du pouvoir séparateur en fréquence.

L'interféromètre 10 comporte également un calculateur 28 récoltant les sorties utiles des TFD des différents modules de traitement numérique du signal 26 et étant propre à obtenir la direction d'arrivée du signal incident illuminant l'ensemble des antennes $A_1$, ..., $A_P$.

Les antennes $A_0$, ..., $A_{P-1}$ peuvent être directives. Si tel est le cas, elles sont généralement pointées selon un axe unique orthogonal à la droite d'alignement de leur centre de phase. La répartition en distance des antennes $A_0$, ..., $A_{P-1}$ est définie pour assurer des caractéristiques spécifiées de précision angulaire et de taux d'ambiguïtés angulaires.

La répartition des fréquences d'échantillonnage sur les modules de conversion analogique-numérique 22 est choisie pour minimiser la quantité de modules de réception numérique 20 constitués chacun de modules de conversion analogique-numérique 22 et de modules de traitement 26 tout en utilisant pleinement les performances possibles liées au réseau d'antennes $A_1$, ..., $A_P$ de l'interféromètre 10.

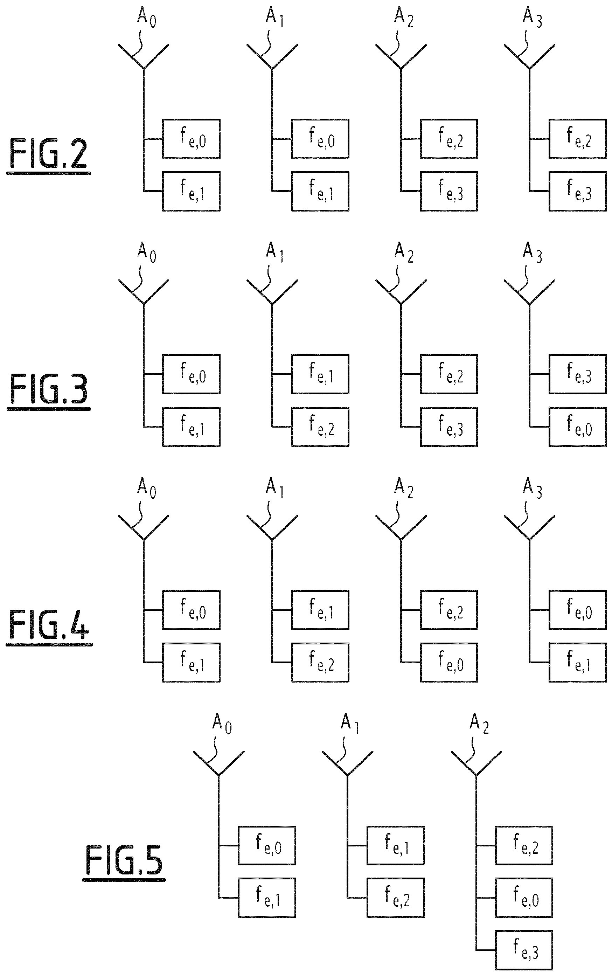

Plusieurs cas particuliers d'interféromètre 10 sont illustrés en référence aux figures 2 à 5.

Dans ces figures, chaque voie de réception est représentée simplement sous forme d'une antenne et chaque module de conversion analogique-numérique est représenté schématiquement par un rectangle dans lequel est indiqué la fréquence d'échantillonnage utilisée par ledit module.

La figure 2 illustre un cas où le nombre de voies de réception $P$ est égal au nombre de fréquences d'échantillonnage $N$, en l'occurrence $P = N = 4$.

Chaque voie de réception comporte uniquement deux modules de conversion analogique-numérique.

Les modules de conversion analogique-numérique de la voie de réception indicée 0 sont associés respectivement à la fréquence d'échantillonnage indicée 0, $f_{e,0}$, et à la fréquence d'échantillonnage indicée 1, $f_{e,1}$. Les modules de conversion analogique-numérique de la voie de réception indicée 1 sont associés respectivement à la fréquence d'échantillonnage indicée 0, $f_{e,0}$, et à la fréquence d'échantillonnage indicée 1, $f_{e,1}$. Les modules de conversion analogique-numérique de la voie de réception indicée 2 sont associés respectivement à la fréquence d'échantillonnage indicée 2, $f_{e,2}$, et à la fréquence d'échantillonnage indicée 3, $f_{e,3}$. Les modules de conversion analogique-numérique de la voie de réception indicée 3 sont associés respectivement à la fréquence d'échantillonnage indicée 2, $f_{e,2}$, et à la fréquence d'échantillonnage indicée 3, $f_{e,3}$.

Ainsi, aucune fréquence de la bande d'intérêt ne se trouve à proximité de multiples de la demi-fréquence d'échantillonnage, simultanément pour les deux fréquences d'échantillonnages associées à une même chaîne de réception ; soit, dans l'exemple illustré ci-dessus, pour $f_{e,0}$ et $f_{e,1}$ simultanément, ou pour $f_{e,2}$ et $f_{e,3}$ simultanément.

On a ainsi pris en compte le premier élément mentionné dans la partie intitulée Résumé de l'invention, à savoir que l'on dispose systématiquement d'une mesure de phase sur chaque antenne, même si la fréquence du signal est proche de $k\dfrac{f_{e,n}}{2}$ pour l'une des fréquences d'échantillonnage $f_{e,n}$. Par ailleurs, dans le cas général où les mesures effectuées grâce aux deux modules de réception numérique d'une même voie de réception sont exploitables, on peut tirer parti de cette redondance d'information pour améliorer la précision de mesure.

Une répartition des fréquences d'échantillonnage telle que celle illustrée par la figure 2 impose de compenser par le calcul le terme de phase $\varphi_{TFD}$, ou d'adapter le nombre de points de l'analyse spectrale, avec les inconvénients accompagnant la description du deuxième élément à prendre en compte.

Un tel cas d'interféromètre ($P = N$) permet également de compenser ce terme par une répartition adaptée des fréquences d'échantillonnage en remarquant que $P$ voies de réception ne délivrent que $P$ - 1 déphasages entre antennes indépendants, et qu'elles permettent de former $P$ jeux différents de $P$ - 1 déphasages indépendants. Ainsi, une répartition adaptée des fréquences d'échantillonnage est telle que chacun des $P$ jeux différents de $P$ - 1 déphasages indépendants utilise en exclusivité l'un des $N = P$ groupes de $N$ - 1 = $P$ - 1 fréquences d'échantillonnage possibles. Par ailleurs, la compensation du terme de phase $\varphi_{TFD}$ tenant à un déphasage correspondant à la soustraction de deux phases issues de voies de réception différentes travaillant à la même fréquence d'échantillonnage, il convient en plus qu'une répartition adaptée des fréquences d'échantillonnage soit telle qu'un quelconque déphasage soit toujours issu de deux phases mesurées avec une même fréquence d'échantillonnage.

Pour cela, il suffit de construire $P$ paires fréquences d'échantillonnages d'indices $n$ et $n$ + 1 pour $n$ allant de 1 à $P$ et d'affecter chacune de ces $P$ paires de fréquences d'échantillonnage à l'une des $P$ voies de réception. Cela revient à affecter la paire fréquence d'échantillonnages d'indices $p$ et $p$ + 1 à la voie de réception d'indice $p$.

La figure 3 illustre un tel cas pour lequel le nombre de voies de réception $P$ est égal au nombre de fréquences d'échantillonnage $N$, en l'occurrence $P = N = 4$.

Chaque voie de réception comporte uniquement deux modules de conversion analogique-numérique.

Les modules de conversion analogique-numérique de la voie de réception indicée 0 sont associés respectivement à la fréquence d'échantillonnage indicée 0, $f_{e,0}$, et à la fréquence d'échantillonnage indicée 1, $f_{e,1}$. Les modules de conversion analogique-numérique de la voie de réception indicée 1 sont associés respectivement à la fréquence d'échantillonnage indicée 1, $f_{e,1}$, et à la fréquence d'échantillonnage indicée 2, $f_{e,2}$. Les modules de conversion analogique-numérique de la voie de réception indicée 2 sont associés respectivement à la fréquence d'échantillonnage indicée 2, $f_{e,2}$, et à la fréquence d'échantillonnage indicée 3, $f_{e,3}$. Les modules de conversion analogique-numérique de la voie de réception indicée 3 sont associés respectivement à la fréquence d'échantillonnage indicée 3, $f_{e,3}$, et à la fréquence d'échantillonnage indicée 0, $t_{e,0}$.

Ainsi, le déphasage entre l'antenne indicée 0 et l'antenne indicée 1 est lié à la fréquence d'échantillonnage indicée 1, $f_{e,1}$, le déphasage entre l'antenne indicée 1 et l'antenne indicée 2 est lié à la fréquence d'échantillonnage indicée 2, $f_{e,2}$, le déphasage entre l'antenne indicée 2 et l'antenne indicée 3 est lié à la fréquence d'échantillonnage indicée 3, $f_{e,3}$, et le déphasage entre l'antenne indicée 3 et l'antenne indicée 0 est lié à la fréquence d'échantillonnage indicée 0, $f_{e,0}$. On dispose en conséquence de quatre déphasages liés chacun à une même fréquence d'échantillonnage, dont trois sont toujours indépendants et basés sur trois fréquences d'échantillonnage parmi les quatre. Ainsi, même si la fréquence du signal est égale ou proche d'un multiple d'une demi-fréquence d'échantillonnage donnée, il existe toujours un jeu de trois déphasages indépendants non lié à cette fréquence d'échantillonnage.

La figure 4 illustre un cas où le nombre de voies de réception $P$ est supérieur au nombre de fréquences d'échantillonnage $N$, en l'occurrence $P = 4 > N = 3$.

Les modules de conversion analogique-numérique de la voie de réception indicée 0 sont associés respectivement à la fréquence d'échantillonnage indicée 0, $f_{e,0}$, et à la fréquence d'échantillonnage indicée 1, $f_{e,1}$. Les modules de conversion analogique-numérique de la voie de réception indicée 1 sont associés respectivement à la fréquence d'échantillonnage indicée 1, $f_{e,1}$, et à la fréquence d'échantillonnage indicée 2, $f_{e,2}$. Les modules de conversion analogique-numérique de la voie de réception indicée 2 sont associés respectivement à la fréquence d'échantillonnage indicée 2, $f_{e,2}$, et à la fréquence d'échantillonnage indicée 0, $f_{e,3}$. Les modules de conversion analogique-numérique de la voie de réception indicée 3 sont associés respectivement à la fréquence d'échantillonnage indicée 0, $f_{e,0}$, et à la fréquence d'échantillonnage indicée 1, $f_{e,1}$.

Cela étant, les modules de conversion analogique-numérique de la voie de réception indicée 3 auraient pu être associés aussi respectivement à la fréquence d'échantillonnage indicée 1, $f_{e,1}$, et à la fréquence d'échantillonnage indicée 2, $f_{e,2}$, ou à la fréquence d'échantillonnage indicée 2, $f_{e,2}$, et à la fréquence d'échantillonnage indicée 0, $f_{e,0}$,

La figure 5 illustre un cas où le nombre de voies de réception $P$ est inférieur au nombre de fréquences d'échantillonnage $N$, en l'occurrence $P = 3 < N = 4$.

Les voies de réception indicées 0 et 1 comportent chacune uniquement deux modules de conversion analogique-numérique alors que la voie de réception indiquée 3 comporte trois modules de conversion analogique-numérique.

Les modules de conversion analogique-numérique de la voie de réception indicée 0 sont associés respectivement à la fréquence d'échantillonnage indicée 0, $f_{e,0}$, et à la fréquence d'échantillonnage indicée 1, $f_{e,1}$. Les modules de conversion analogique-numérique de la voie de réception indicée 1 sont associés respectivement à la fréquence d'échantillonnage indicée 1, $f_{e,1}$, et à la fréquence d'échantillonnage indicée 2, $f_{e,2}$. Les modules de conversion analogique-numérique de la voie de réception indicée 2 sont associés respectivement à la fréquence d'échantillonnage indicée 2, $f_{e,2}$, à la fréquence d'échantillonnage indicée 0, $f_{e,0}$, et à la fréquence d'échantillonnage indicée 3, $f_{e,3}$.

Dans chacun des cas où le nombre de voies de réception $P$ est inférieur au nombre de fréquences d'échantillonnage $N$, chaque paire de fréquences d'échantillonnage d'indice $p$ et $p + 1$ est associée à une paires de modules de conversion analogique-numérique d'une même voie de réception d'indice $p$. De plus, les $N - P$ fréquences d'échantillonnages ne faisant pas partie d'une paire de fréquences d'échantillonnage d'indices $p$ et $p + 1$, pour un indice $p$ variant entre 0 et $P - 1$, imposent d'ajouter $N - P$ modules de conversion analogique-numérique supplémentaires, chacun étant associé à l'une de ces $N - P$ fréquences d'échantillonnages, et ces $N - P$ modules de conversion analogique-numérique supplémentaires sont répartis de façon quelconque sur les $P$ voies de réception.

De manière générale, il a été décrit un interféromètre large bande à sous-échantillonnage multiple minimisant le nombre des modules de réception numérique. Au-delà des aspects coût, masse, volume, consommation et fiabilité directement liés à cette minimisation, cela permet aussi d'optimiser la charge de calcul du module de traitement.

Pour le cas du goniomètre d'amplitude, le schéma est similaire à celui de la figure 1 sauf que les antennes sont angulairement pointées de façon décalée les unes par rapport aux autres dans le plan de mesure de l'angle d'arrivée d'un signal incident, de façon que leur directivité leur fasse délivrer un ensemble de signaux dont les puissances sont représentatives de cet angle d'arrivée.

D'une façon générale, il faut avoir au moins 2 fréquences d'échantillonnage différentes par voies de réception pour assurer au moins une mesure d'amplitude et $N$ fréquences d'échantillonnage sur $Q$ voies de réception adjacentes pour lever les ambiguïtés en fréquence.

À partir des $N$ fréquences d'échantillonnage qui sont toutes différentes et non-multiples entre elles, on construit $J$ groupes de fréquences d'échantillonnage ($G_0, ... , G_{J-1}$), chaque groupe comprenant au moins 2 fréquences d'échantillonnage différentes, l'ensemble des $J$ groupes comprenant l'ensemble des $N$ fréquences d'échantillonnage de telle façon que $J$ soit minimal et au plus égal à $Q$.

Par exemple, soit $N = 3$ fréquences d'échantillonnage $f_{e,0}$, $f_{e,1}$ et $f_{e,2}$, pour $Q \geq 2$, on obtient deux groupes : $G_0 = (f_{e,0}, f_{e,1})$ et $G_1 = (f_{e,2}, f_{e,x})$ avec $x$ pouvant être 0, 1 ou 2.

Par exemple, soit $N = 4$ fréquences d'échantillonnage $f_{e,0}$, $f_{e,1}$, $f_{e,2}$ et $f_{e,3}$, pour $Q \geq 2$, on obtient deux groupes : $G_0 = (f_{e,0}, f_{e,1})$ et $G_1 = (f_{e,2}, f_{e,3})$.

Par exemple, soit $N = 5$ fréquences d'échantillonnage $f_{e,0}$, $f_{e,1}$, $f_{e,2}$, $f_{e,3}$ et $f_{e,4}$, pour $Q = 2$, on obtient deux groupes : $G_0 = (f_{e,0}, f_{e,1})$ et $G_1 = (f_{e,2}, f_{e,3}, f_{e,4})$ ; par contre, pour $Q \geq 3$, on obtient trois groupes : $G_0 = (f_{e,0}, f_{e,1})$, $G_1 = (f_{e,2}, f_{e,3})$ et $G_1 = (f_{e,4}, f_{e,x})$ avec $x$ pouvant être 0, 1, 2 ou 3.

Les modules de conversion analogique-numérique d'une voie de réception d'indice $p$ sont associés au groupe de fréquences d'échantillonnage de la séquence $G_{p \cdot \mathrm{mod}(J)}$, pour $p$ allant de 0 à $P - 1$.

Une couverture angulaire instantanée inférieure à 360° engendre $P - Q + 1$ ensembles de $Q$ voies de réception adjacentes. L'affectation des groupes de fréquences d'échantillonnage aux voies de réception selon la règle précédemment définie assure de pouvoir travailler avec les $N$ fréquences d'échantillonnage à chacun des $P - Q + 1$ ensembles de $Q$ voies de réception adjacentes.

Par contre, une couverture angulaire instantanée de 360° engendre $P$ ensembles de $Q$ voies de réception adjacentes pour des raisons de continuité circulaire, l'indice 0 succédant à l'indice $P - 1$. Dans ce cas, l'affectation des groupes de fréquences d'échantillonnage aux voies de réception selon la règle précédemment définie n'assure de pouvoir travailler avec les $N$ fréquences d'échantillonnage à chacun des $P$ ensembles de $Q$ voies de réception adjacentes que si $P$ est un multiple de $J$ ou si $Q$ est égal à $P$.

En effet, dans ce cas d'une couverture angulaire instantanée de 360°, le fait que $P$ ne soit pas un multiple de $J$ fait que la règle d'affectation des groupes de fréquences d'échantillonnage aux voies de réception, précédemment définie, n'affecte pas à tous les ensembles de $Q$ voies de réception adjacentes, comprenant les voies de réception d'indices $P - 1$ et 0, tous les groupes de fréquences d'échantillonnage ($G_0$, ... , $G_{J-1}$) définis, sauf si $Q$ est égal à $P$.

Si $Q$ est inférieur à $P$, on constate qu'il existe toujours des ensembles de $Q$ voies de réception adjacentes, comprenant les voies de réception d'indices $P - 1$ et 0, qui n'ont accès qu'aux groupes de fréquences d'échantillonnage $G_0$ à $G_{R-1}$, $R$ étant le reste de la division euclidienne de $P$ par $J$, ils n'ont donc pas accès aux groupes de fréquences d'échantillonnage $G_R$ à $G_{J-1}$.

En conséquence, dans le cas où la couverture angulaire instantanée est égale à 360° et $P$ n'est ni un multiple de $J$, ni égal à $Q$, en plus de la règle précédemment définie qui affecte aux voies de réception d'indices $P - 1$ et 0, respectivement les groupes de fréquences d'échantillonnage $G_{R-1}$ et $G_0$, une solution optimale simple consiste à affecter à l'ensemble de ces deux voies de réception, l'ensemble des fréquences d'échantillonnage des groupes $G_R$ à $G_{J-1}$ n'appartenant pas à l'ensemble des groupes $G_{R-1}$ et $G_0$. Cette affectation complémentaire de fréquences d'échantillonnage peut se faire indifféremment tout sur la voie de réception d'indice 0, tout sur la voie de réception d'indice $P - 1$, ou partagé de façon quelconque entre ces deux voies de réception.

Il faut noter que la précision angulaire, allant de pair avec de grandes valeurs de $Q$, exige évidemment que des mesures d'amplitude soient faites pour les antennes d'indices extrêmes de la plage des $Q$ indices. En raison de la directivité des antennes, le gain des antennes d'indices extrêmes de la plage des $Q$ indices sur le signal incident est d'autant plus petit par rapport à celui sur l'antenne centrale de cette plage que $Q$ est grand. Cela contribue à diminuer la sensibilité globale.

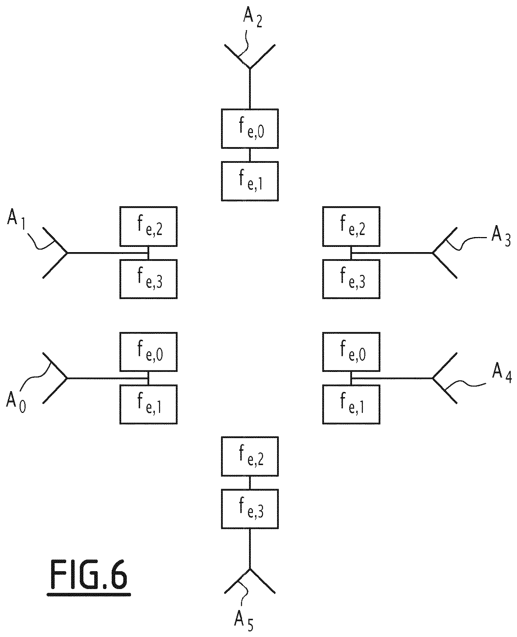

La figure 6 illustre un cas où la couverture angulaire instantanée est de 360° avec $N = 4$, $P = 6$ et $Q = 2$. $N = 4$ et $Q = 2$ font que $J = 2$ et en conséquence que $P$ est un multiple de $J$.

Il y a deux groupes de fréquences d'échantillonnage : $G_0$ comprenant la fréquence d'échantillonnage indicée 0, $f_{e,0}$, et la fréquence d'échantillonnage indicée 1, $f_{e,1}$, et $G_1$ comprenant la fréquence d'échantillonnage indicée 2, $f_{e,2}$, et la fréquence d'échantillonnage indicée 3, $f_{e,3}$.

Les modules de conversion analogique-numérique de la voie de réception indicée 0 sont associés respectivement à la fréquence d'échantillonnage indicée 0, $f_{e,0}$, et à la fréquence d'échantillonnage indicée 1, $f_{e,1}$. Les modules de conversion analogique-numérique de la voie de réception indicée 1 sont associés respectivement à la fréquence d'échantillonnage indicée 2, $f_{e,2}$, et à la fréquence d'échantillonnage indicée 3, $f_{e,3}$. Les modules de conversion analogique-numérique de la voie de réception indicée 2 sont associés respectivement à la fréquence d'échantillonnage indicée 0, $f_{e,0}$, et à la fréquence d'échantillonnage indicée 1, $f_{e,1}$. Les modules de conversion analogique-numérique de la voie de réception indicée 3 sont associés respectivement à la fréquence d'échantillonnage indicée 2, $f_{e,2}$, et à la fréquence d'échantillonnage indicée 3, $f_{e,3}$. Les modules de conversion analogique-numérique de la voie de réception indicée 4 sont associés respectivement à la fréquence d'échantillonnage indicée 0, $f_{e,0}$, et à la fréquence d'échantillonnage indicée 1, $f_{e,1}$. Les modules de conversion analogique-numérique de la voie de réception indicée 5 sont associés respectivement à la fréquence d'échantillonnage indicée 2, $f_{e,2}$, et à la fréquence d'échantillonnage indicée 3, $f_{e,3}$.

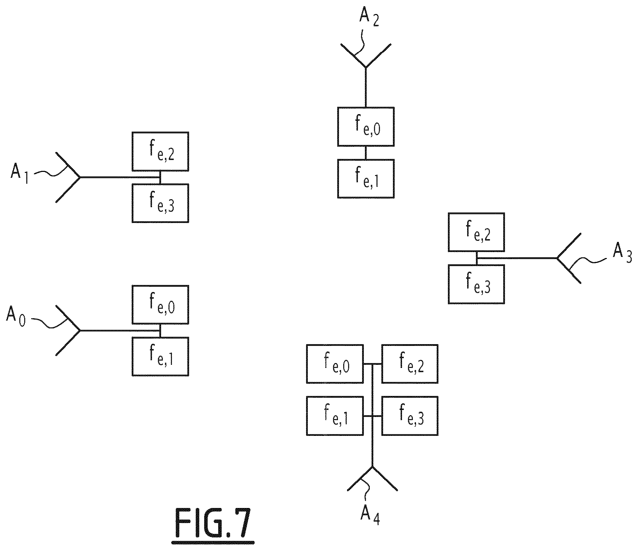

La figure 7 illustre un cas où la couverture angulaire instantanée est de 360° avec $N = 4$, $P = 5$ et $Q = 2$. $N = 4$ et $Q = 2$ font que $J = 2$ et en conséquence que $P$ n'est un multiple de $J$, et $Q$ est inférieur à $P$.

Il y a deux groupes de fréquences d'échantillonnage : $G_0$ comprenant la fréquence d'échantillonnage indicée 0, $f_{e,0}$, et la fréquence d'échantillonnage indicée 1, $f_{e,1}$, et $G_1$ comprenant la fréquence d'échantillonnage indicée 2, $f_{e,2}$, et la fréquence d'échantillonnage indicée 3, $f_{e,3}$.

Les modules de conversion analogique-numérique de la voie de réception indicée 0 sont associés respectivement à la fréquence d'échantillonnage indicée 0, $f_{e,0}$, et à la fréquence d'échantillonnage indicée 1, $f_{e,1}$. Les modules de conversion analogique-numérique de la voie de réception indicée 1 sont associés respectivement à la fréquence d'échantillonnage indicée 2, $f_{e,2}$, et à la fréquence d'échantillonnage indicée 3, $f_{e,3}$. Les modules de conversion analogique-numérique de la voie de réception indicée 2 sont associés respectivement à la fréquence d'échantillonnage indicée 0, $f_{e,0}$, et à la fréquence d'échantillonnage indicée 1, $f_{e,1}$. Les modules de conversion analogique-numérique de la voie de réception indicée 3 sont associés respectivement à la fréquence d'échantillonnage indicée 2, $f_{e,2}$, et à la fréquence d'échantillonnage indicée 3, $f_{e,3}$. La voie de réception indicée 4 possède quatre modules de conversion analogique-numérique : deux premiers associés respectivement à la fréquence d'échantillonnage indicée 0, $f_{e,0}$, et à la fréquence d'échantillonnage indicée 1, $f_{e,1}$, et deux seconds en fait complémentaires, associés respectivement à la fréquence d'échantillonnage indicée 2, $f_{e,2}$, et à la fréquence d'échantillonnage indicée 3, $f_{e,3}$.

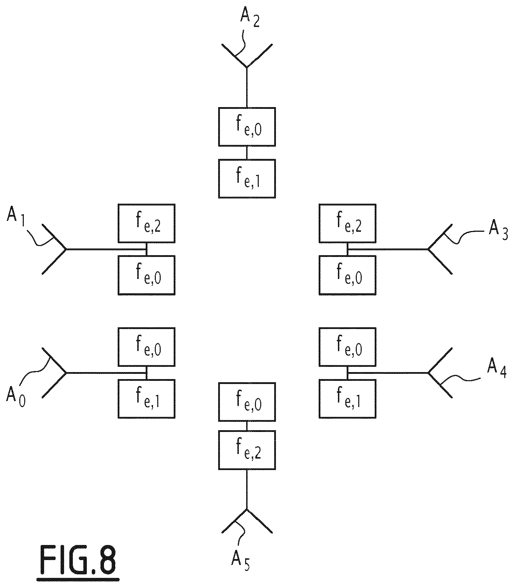

La figure 8 illustre un cas où la couverture angulaire instantanée est de 360° avec $N = 3$, $P = 6$ et $Q = 2$. $N = 3$ et $Q = 2$ font que $J = 2$ et en conséquence que $P$ est un multiple de $J$.

Il y a deux groupes de fréquences d'échantillonnage : $G_0$ comprenant la fréquence d'échantillonnage indicée 0, $f_{e,0}$, et la fréquence d'échantillonnage indicée 1, $f_{e,1}$, et $G_1$ comprenant la fréquence d'échantillonnage indicée 2, $f_{e,2}$, et une quelconque fréquence d'échantillonnage différente de celle indicée 2, $f_{e,2}$. Pour la figure, la fréquence d'échantillonnage choisie est celle indicée 0, $f_{e,0}$, mais cela aurait pu être celle indicée 1, $f_{e,1}$. Il faut noter que cette possibilité de choix est valable au niveau de chaque voie de réception utilisant $G_1$.

Les modules de conversion analogique-numérique de la voie de réception indicée 0 sont associés respectivement à la fréquence d'échantillonnage indicée 0, $f_{e,0}$, et à la fréquence d'échantillonnage indicée 1, $f_{e,1}$. Les modules de conversion analogique-numérique de la voie de réception indicée 1 sont associés respectivement à la fréquence d'échantillonnage indicée 2, $f_{e,2}$, et à la fréquence d'échantillonnage indicée 0, $f_{e,0}$. Les modules de conversion analogique-numérique de la voie de réception indicée 2 sont associés respectivement à la fréquence d'échantillonnage indicée 0, $f_{e,0}$, et à la fréquence d'échantillonnage indicée 1, $f_{e,1}$. Les modules de conversion analogique-numérique de la voie de réception indicée 3 sont associés respectivement à la fréquence d'échantillonnage indicée 2, $f_{e,2}$, et à la fréquence d'échantillonnage indicée 0, $f_{e,0}$. Les modules de conversion analogique-numérique de la voie de réception indicée 4 sont associés respectivement à la fréquence d'échantillonnage indicée 0, $f_{e,0}$, et à la fréquence d'échantillonnage indicée 1, $f_{e,1}$. Les modules de conversion analogique-numérique de la voie de réception indicée 5 sont associés respectivement à la fréquence d'échantillonnage indicée 2, $f_{e,2}$, et à la fréquence d'échantillonnage indicée 0, $f_{e,0}$.

Il est à noter que, dans le cas d'un goniomètre d'amplitude, le deuxième élément mentionné dans la partie Résumé de l'invention n'est pas pris en compte. Comme expliqué dans cette partie, l'erreur de mesure d'amplitude, due aux conditions de filtrage du signal différentes des TFD réalisées par les modules de traitement numérique du signal (26) quand les fréquences d'échantillonnage sont différentes, est moins critique que l'erreur de mesure de phase pour un interféromètre. Cette erreur est par ailleurs minimisée par la pondération du signal généralement utilisée qui élargit la bande passante du filtre de TFD. L'erreur résiduelle peut au besoin être corrigée en connaissant précisément la fréquence du signal, qui est toujours mesurée dans un détecteur de radars.

Enfin, l'invention a été déclinée pour des goniomètres 1D (une dimension), c'est-à-dire mesurant un seul angle, l'angle dans le plan où sont disposées les antennes. Il faut noter que la généralisation à des goniomètres 2D (deux dimensions), c'est-à-dire mesurant deux angles, les angles situés dans deux plans non parallèles, se fait en suivant les mêmes principes de base.

## Revendications

1. Goniomètre d'amplitude (10) comprenant $P$ voies de réception ($V_0$, ..., $V_{P-1}$), $P$ étant un nombre entier supérieur ou égal à 2, chaque voie de réception ($V_0$, ..., $V_{P-1}$) étant repérée par un indice $p$ correspondant à un ordre angulaire donné, l'indice $p$ étant un entier compris entre 0 et $P$ - 1, chaque voie de réception ($V_0$, ..., $V_{P-1}$) comportant une antenne ($A_0$, ..., $A_{P-1}$) couplée à une chaîne de réception ($CR_0$, ..., $CR_{P-1}$), chaque chaîne de réception ($CR_0$, ..., $CR_{P-1}$) étant suivie d'au moins deux modules de réception numérique (20) comprenant chacun un module de conversion analogique-numérique (22), chaque module de conversion analogique-numérique (22) étant associé à une fréquence d'échantillonnage respective, chaque fréquence d'échantillonnage ne respectant pas le critère de Shannon et n'étant pas multiple de l'une des autres fréquences d'échantillonnage, $N$ étant le nombre de fréquences d'échantillonnage associées aux modules de conversion analogique-numérique (22) appartenant au $P$ voies de réception ($V_0$, ..., $V_{P-1}$), $N$ étant supérieur ou égal à 2, chaque fréquence d'échantillonnage étant référencée par un indice $n$, l'indice $n$ étant compris entre 0 et $N$ - 1, l'estimateur de goniométrie d'amplitude travaillant à partir des amplitudes des signaux issus d'au moins $Q$ voies de réception adjacentes parmi les $P$ voies de réception ($V_0$, ..., $V_{P-1}$), $Q$ étant au plus égal à $P$, les fréquences d'échantillonnage étant associées aux modules de conversion analogique-numérique (22) de ces $Q$ voies de réception ($V_0$, ..., $V_{P-1}$) adjacentes,

les $N$ fréquences d'échantillonnage étant réparties en $J$ groupes de fréquences d'échantillonnage ($G_0$, ..., $G_{J-1}$), chaque groupe comprenant au moins 2 fréquences d'échantillonnage différentes, avec $J$ étant minimal et au plus égal à $Q$,
les modules de conversion analogique-numérique d'une voie de réception d'indice $p$ étant associés au groupe de fréquences d'échantillonnage $G_{p \cdot \mod(J)}$, pour $p$ allant de 0 à $P$ - 1, la couverture angulaire étant égale à 360° et $P$ étant supérieur ou égal à 3,
$P$ n'étant ni un multiple de $J$, ni égal à $Q$, et les fréquences d'échantillonnage des groupes $G_R$ à $G_{J-1}$ étant associées respectivement à des modules de conversion analogique-numérique de modules de réception numérique complémentaires, ces modules de réception numérique complémentaires étant affectés de façon quelconque à l'ensemble des deux voies de réception $V_0$ et $V_{P-1}$, et $R$ étant le reste de la division euclidienne de $P$ par $J$.

2. Goniomètre d'amplitude selon la revendication 1, dans lequel le nombre de voies de réception ($V_0$, ..., $V_{P-1}$) adjacentes minimal requis par l'estimation de la direction d'arrivée est égal à 2.

3. Goniomètre d'amplitude selon la revendication 1 ou 2, comportant un calculateur (28) propre à traiter les signaux provenant de module de réception numérique (20).

4. Goniomètre d'amplitude selon l'une quelconque des revendications 1 à 3, dans lequel chaque système de conversion analogique-numérique (22) est relié à un module de traitement numérique du signal (26) propre à effectuer une analyse spectrale des signaux échantillonnés.

5. Goniomètre d'amplitude selon la revendication 4, dans lequel l'analyse spectrale est réalisée par transformée de Fourier discrète associée à une pondération des signaux échantillonnés en amont.

6. Plate-forme comportant un goniomètre d'amplitude selon l'une quelconque des revendications 1 à 5.

**Patentansprüche**

1. Amplitudengoniometer (10), umfassend $P$ Empfangskanäle ($V_0$, ..., $V_{P-1}$), wobei $P$ eine ganze Zahl größer oder gleich 2 ist, wobei jeder Empfangskanal ($V_0$, ..., $V_{P-1}$) durch einen Index $p$ gekennzeichnet ist, der einer gegebenen Winkelordnung entspricht, der Index $p$ eine ganze Zahl zwischen 0 und $P$ - 1 ist, jeder Empfangskanal ($V_0$, ..., $V_{P-1}$) eine Antenne ($A_0$, ..., $A_{P-1}$), die mit einer Empfangskette ($CR_0$, ..., $CR_{P-1}$) gekoppelt ist, umfasst, auf jede Empfangs-kette ($CR_0$, ..., $CR_{P-1}$) mindestens zwei digitale Empfangsmodule (20) folgen, jeweils umfassend ein Analog-Digital-Wandlermodul (22), jedes Analog-Digital-Wandlermodul (22) mit einer jeweiligen Abtastfrequenz assoziiert ist, jede Abtastfrequenz nicht das Shannon-Kriterium erfüllt und kein Vielfaches einer der anderen Abtastfrequenzen ist, $N$ die Anzahl an Abtastfrequenzen ist, die mit den Analog-Digital-Wandlermodulen (22) assoziiert sind, die zu den $P$ Empfangskanälen ($V_0$, ..., $V_{P-1}$) gehören, $N$ größer oder gleich 2 ist, jede Abtastfrequenz durch einen Index $n$ referenziert wird, der Index $n$ zwischen 0 und $N$ - 1 liegt, der Amplitudengoniometrie-Schätzer anhand der Amplituden der Signale arbeitet, die von mindestens $Q$ angrenzenden Empfangskanälen der $P$ Empfangskanäle ($V_0$, ..., $V_{P-1}$) ausgegeben werden, wobei $Q$ höchstens gleich $P$ ist, die Abtastfrequenzen mit den Analog-Digital-Wandlermodulen (22) dieser $Q$ angrenzenden Empfangskanäle ($V_0$, ..., $V_{P-1}$) assoziiert sind,

die $N$ Abtastfrequenzen in $J$ Gruppen von Abtastfrequenzen ($G_0$, ..., $G_{J-1}$) aufgeteilt sind, jede Gruppe umfassend mindestens 2 verschiedene Abtastfrequenzen wobei $J$ minimal und höchstens gleich $Q$ ist,
wobei die Analog-Digital-Wandlermodule eines Empfangskanals mit dem Index $p$ der Gruppe von Abtastfre-quenzen $G_{p \cdot \mod(J)}$ assoziiert sind, für $p$ von 0 bis $P$ - 1, wobei die Winkelabdeckung gleich 360° ist und $P$ größer oder gleich 3 ist,
wobei $P$ weder ein Vielfaches von $J$ noch gleich $Q$ ist, und wobei die Abtastfrequenzen der Gruppen $G_R$ bis $G_{J-1}$ jeweils mit Analog-Digital-Wandlermodulen von komplementären digitalen Empfangsmodulen assoziiert sind, wobei diese komplementären digitalen Empfangsmodule auf beliebige Weise allen beiden Empfangskanälen $V_0$ und $V_{P-1}$ zugeordnet sind, und wobei $R$ der Rest der euklidischen Division von $P$ durch $J$ ist.

2. Amplitudengoniometer nach Anspruch 1, wobei die minimale Anzahl von angrenzenden Empfangskanälen ($V_0$, ..., $V_{P-1}$), die für die Schätzung der Ankunftsrichtung erforderlich ist, gleich 2 ist.

3. Amplitudengoniometer nach Anspruch 1 oder 2, umfassend einen Rechner (28), der geeignet ist, um die Signale zu verarbeiten, die von dem digitalen Empfangsmodul (20) stammen.

4. Amplitudengoniometer nach einem der Ansprüche 1 bis 3, wobei jedes Analog-Digital-Wandlungssystem (22) mit einem digitalen Verarbeitungsmodul des Signals (26) verbunden ist, das geeignet ist, um eine Spektralanalyse der abgetasteten Signale durchzuführen.

5. Amplitudengoniometer nach Anspruch 4, wobei die Spektralanalyse durch separate Fourier-Transformation assoziiert mit einer Gewichtung der vorab abgetasteten Signale durchgeführt wird.

6. Plattform, umfassend einen Amplitudengoniometer nach einem der Ansprüche 1 bis 5.

**Claims**

1. An amplitude goniometer (10) comprising $P$ receiver channels ($V_0$, ..., $V_{P-1}$), $P$ being an integer greater than or equal to 2, each receiver channel ($V_0$, ..., $V_{P-1}$) being identified by an index $p$ corresponding to a given angular order, the index $p$ being an integer between 0 and $P$ - 1, each receiver channel ($V_0$, ..., $V_{P-1}$) including an antenna ($A_0$, ..., $A_{P-1}$) coupled to a receiver chain ($CR_0$, ..., $CR_{P-1}$), each receiver chain ($CR_0$, ..., $CR_{P-1}$) being followed by at least two digital receiver modules (20) each comprising an analog-digital conversion module (22), each analog-digital conversion module (22) being associated with a respective sampling frequency, each sampling frequency not complying with the Shannon criterion and not being a multiple of one of the other sampling frequencies, $N$ being the number of sampling frequencies associated with the analog-digital conversion modules (22) belonging to the $P$ receiver channels ($V_0$, ..., $V_{P-1}$), $N$ being greater than or equal to 2, each sampling frequency being referenced by an index $n$, the index $n$ being between 0 and $N$ - 1, the amplitude goniometry estimator working from amplitudes of the signals originating from at least $Q$ adjacent receiver channels among the $P$ receiver channels ($V_0$, ..., $V_{P-1}$), $Q$ being at most equal to $P$, the sampling frequencies being associated with the analog-digital conversion modules (22) of these $Q$ adjacent receiver channels ($V_0$, ..., $V_{P-1}$),

   the $N$ sampling frequencies being divided into $J$ sampling frequency groups ($G_0$, ..., $G_{J-1}$), each group comprising at least 2 different sampling frequencies, with $J$ being minimal and at most equal to $Q$,
   the analog-digital conversion modules of a receiver channel with index $p$ being associated with the group of sampling frequencies $G_{p \cdot \mathrm{mod}(J)}$, for $p$ ranging from 0 to $P$ - 1, the angular coverage being equal to 360° and $P$ is greater than or equal to 3,
   $P$ not being a multiple of $J$, nor equal to $Q$, and the sampling frequencies of the groups $G_R$ to $G_{J-1}$ being respectively associated with analog-digital conversion modules of complementary digital receiver modules, these complementary digital receiver modules being assigned in any manner to the set of two receiver channels $V_0$ and $V_{P-1}$, and $R$ being the remainder of the Euclidean division of $P$ by $J$.

2. The amplitude goniometer according to claim 1, wherein the minimum number of adjacent receiver channels ($V_0$, ..., $V_{P-1}$) required by the estimate of the direction of arrival is equal to 2.

3. The amplitude goniometer according to claim 1 or 2, including a computer (28) able to process the signals coming from the digital receiver module (20).

4. The amplitude goniometer according to any one of claims 1 to 3, wherein each analog-digital conversion system (22) is connected to a digital processing module (26) of the signal able to perform a spectral analysis of the sampled signals.

5. The amplitude goniometer according to claim 4, wherein the spectral analysis is done by discrete Fourier transform associated with a weighting of the sampled signals upstream.

6. A platform including an amplitude goniometer according to any one of claims 1 to 5.

FIG.1

FIG.2

$A_0$ — $f_{e,0}$ / $f_{e,1}$

$A_1$ — $f_{e,0}$ / $f_{e,1}$

$A_2$ — $f_{e,2}$ / $f_{e,3}$

$A_3$ — $f_{e,2}$ / $f_{e,3}$

FIG.3

$A_0$ — $f_{e,0}$ / $f_{e,1}$

$A_1$ — $f_{e,1}$ / $f_{e,2}$

$A_2$ — $f_{e,2}$ / $f_{e,3}$

$A_3$ — $f_{e,3}$ / $f_{e,0}$

FIG.4

$A_0$ — $f_{e,0}$ / $f_{e,1}$

$A_1$ — $f_{e,1}$ / $f_{e,2}$

$A_2$ — $f_{e,2}$ / $f_{e,0}$

$A_3$ — $f_{e,0}$ / $f_{e,1}$

FIG.5

$A_0$ — $f_{e,0}$ / $f_{e,1}$

$A_1$ — $f_{e,1}$ / $f_{e,2}$

$A_2$ — $f_{e,2}$ / $f_{e,0}$ / $f_{e,3}$

$A_2$

$f_{e,0}$

$f_{e,1}$

$A_1$    $f_{e,2}$       $f_{e,2}$    $A_3$

$f_{e,3}$       $f_{e,3}$

$f_{e,0}$       $f_{e,0}$

$A_0$    $f_{e,1}$       $f_{e,1}$    $A_4$

$f_{e,2}$

$f_{e,3}$

## FIG.6

$A_5$

$$\text{FIG.7}$$

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010069683 A1

- WO 2004097450 A